# EUROPÄISCHE PATENTANMELDUNG

(11) **EP 2 173 129 A2**
(43) Veröffentlichungstag der Anmeldung: **07.04.2010**
(21) Anmeldenummer: 09012297.9
(22) Anmeldetag: 28.09.2009
(51) Int. Cl.: H04W 52/36

(54) **Mobiles Endgerät mit variabler Sendeleistung**

(30) Priorität: 01.10.2008 DE 102008050174
(71) Anmelder: Giesecke & Devrient GmbH, 81677 München (DE)
(72) Erfinder: Rankl, Wolfgang, 81825 München (DE)

(57) **Zusammenfassung**

Die Erfindung schafft ein mobiles Endgerät (EG) zum Betreiben von Verbindungen in einem Mobilfunknetz mit einem durch einen Nutzer des Endgeräts (EG) betätigbaren Schalter (S) zum Einstellen der mit dem Endgerät (EG) maximal aussendbaren Sendeleistung in Abhängigkeit von einer Schalterstellung des Schalters (S), Standard-Schalterstellung (ST) mit standardmäßig vorgesehener erster maximaler Sendeleistung des Endgeräts, oder Öko-Schalterstellung (ECO) mit einer geringeren zweiten maximalen Sendeleistung.

## Beschreibung

Mobile Endgeräte werden zum Herstellen von Verbindungen, z.B. Sprachverbindungen oder Nachrichtendienst-Verbindungen (z.B. SMS, MMS) in Mobilfunknetzen verwendet. Ein Endgerät ist in der Regel in einem einzelnen Mobilfunknetz angemeldet. Im nationalen Roaming ist es üblich, dass ein Endgerät, das in einem bestimmten Mobilfunknetz angemeldet ist, gemäß vorbestimmten oder vorbestimmbaren Kriterien auch andere nationale Mobilfunknetze nutzen kann. Die meisten mobilen Endgeräte enthalten eine Identitätskarte (z.B. (U)SIM-Karte).

Mobile Endgeräte wie Mobiltelefone, Smart Phones, PDAs mit Mobiltelefonfunktion und dergleichen sind in weiten Teilen der Bevölkerung in Verruf geraten, dass sie den Nutzer durch Elektrosmog schädigen, der durch die vom Endgerät bei seinem Betrieb zum Nutzer hin abgestrahlte elektromagnetische Strahlung verursacht sei. Herkömmlicherweise ist ein mobiles Endgerät dazu ausgelegt, stets mit einer Sendeleistung zu senden, die eine möglichst gute Verbindungsqualität garantiert. Der Nutzer hat keinen direkten Einfluss auf die Sendeleistung des Endgeräts. Andererseits ist es bekannt, dass in vielen Situationen, z.B. in Gebieten mit guter Netzabdeckung, auch eine geringere Sendeleistung als die herkömmlicherweise standardmäßig angewandte zu einer ausreichenden Verbindungsqualität führen würde.

Der Erfindung liegt die Aufgabe zu Grunde, ein mobiles Endgerät zu schaffen, bei dem die Belastung eines Nutzers durch elektromagnetische Strahlung reduziert ist.

US 2004/0029605 A1 zeigt ein Mobilfunkgerät gemäß dem Oberbegriff des vorliegenden Anspruchs 1.

Die Aufgabe wird gelöst durch ein mobiles Endgerät nach Anspruch 1. Vorteilhafte Ausgestaltungen der Erfindung sind in den abhängigen Ansprüchen angegeben.

Das mobile Endgerät ist eingerichtet zum Betreiben von Verbindungen in einem Mobilfunknetz, und ist mit einer Transmitterschaltung, die ein Senden von elektromagnetischer Strahlung zum Betreiben der Verbindungen mit variabler Sendeleistung ermöglicht, ausgestattet. Das Endgerät zeichnet sich aus durch einen durch einen Nutzer des Endgeräts betätigbaren Schalter zum Einstellen der mit dem Endgerät maximal aussendbaren Sendeleistung in Abhängigkeit von einer Schalterstellung des Schalters. Mit dem Schalter sind mindestens zwei Schalterstellungen einstellbar, die mindestens zwei Stufen von Sendeleistung entsprechen. Bei einer Standard-Schalterstellung des Schalters ist eine standardmäßig vorgesehene erste maximale Sendeleistung des Endgeräts eingestellt. Bei einer Öko-Schalterstellung des Schalters ist eine geringere zweite maximale Sendeleistung des Endgeräts eingestellt.

Der Schalter ermöglicht es dem Nutzer des mobilen Endgeräts, in Abhängigkeit von vorbestimmten - z.B. selbst gewählten oder wählbaren - Kriterien den Schalter entweder in der Standard-Stellung zu belassen oder in die Öko-Stellung zu schalten und im zweiten Fall die maximale Sendeleistung auf einen niedrigeren Wert zu begrenzen als standardmäßig vorgesehen, um sich vor unnötig hoher elektromagnetischer Strahlung und damit möglicherweise verbundenen Elektrosmog zu schützen.

Das Endgerät weist weiter eine Weichenschaltung auf, mit der eine beim Endgerät eingehende Anfrage zum Herstellen einer Verbindung daraufhin überprüfbar ist, welche Sendeleistung zum Herstellen der Verbindung gemäß der Anfrage erforderlich ist, und mit der die am Endgerät eingestellte Schalterstellung überprüfbar ist. Diese ist eingerichtet, dass in Abhängigkeit vom Ergebnis der Überprüfungen entweder die Verbindung hergestellt wird oder die Verbindung zumindest zunächst nicht hergestellt wird und eine alternative Behandlung der Anfrage durchgeführt wird. Die Weichenschaltung ist dazu eingerichtet, die Verbindung dann zumindest zunächst nicht herzustellen und die alternative Behandlung der Anfrage durchzuführen, falls am Endgerät die Öko-Schalterstellung eingestellt ist und zugleich, gemäß der Überprüfung, zum Herstellen der Verbindung gemäß der Anfrage eine Sendeleistung erforderlich ist, welche die der Öko-Schalterstellung entsprechende geringere zweite maximale Sendeleistung, erreicht oder übersteigt.

Folglich ist ein Endgerät geschaffen, bei dem die Belastung eines Nutzers durch elektromagnetische Strahlung reduziert ist.

Die Kriterien umfassen beispielsweise wahlweise: die Wichtigkeit, Notwendigkeit, Dringlichkeit der Verbindung, Art der Verbindung. Beispielsweise werden Notrufe und wichtige bzw. dringende Verbindungen mit hoher maximaler Sendeleistung (Standard-Schalterstellung) durchgeführt, z.B. mit maximaler Sendeleistung. Weniger wichtige Unterhaltungsverbindungen werden wahlweise mit geringer maximaler Sendeleistung durchgeführt (Öko-Schalterstellung). Wahlweise werden Verbindungen gemäß Nachrichten- oder Datendiensten, z.B. SMS (Short Message Service) oder MMS (Media Messaging Service), GPRS (general packet radio system), HSDPA (high speed downlink packet access), HSUPA (high speed uplink packet access) etc., im Gegensatz zu Sprachverbindungen stets mit geringer maximaler Sendeleistung (Öko-Schalterstellung) durchgeführt.

Wahlweise ist der Schalter als zumindest teilweise mechanischer Schaltknopf gestaltet, der z.B. an einem Gehäuse des Endgeräts angebracht ist, und der beispielsweise in eine ohnehin am Gerät vorgesehene Tastatur integriert ist.

Wahlweise ist der Schalter als auswählbarer Menüpunkt in einem softwaretechnisch implementierten Menü des Endgeräts gestaltet. Beispielsweise ist der Schalter als Auswahlmöglichkeit in einem Menü zu Geräteeinstellungen oder dergleichen des Endgeräts verwirklicht.

Wahlweise weist das Endgerät weiter einen Sendeleistungs-Indikator auf, mit dem die Schalterstellung oder die in Abhängigkeit von der Schalterstellung eingestellte maximale Sendeleistung für den Nutzer wahrnehmbar anzeigbar ist. Bei einem zumindest teilweise mechanischen Schalter ist der Sendeleistungs-Indikator beispielsweise als Markierung auf, an oder neben dem Schalter gestaltet. Bei einem in Software implementierten Schalter, der als auswählbarer Menüpunkt gestaltet ist, ist der Sendeleistungs-Indikator wahlweise als visuell dargestelltes Symbol auf einem Anzeigeschirm (Display) des Endgeräts gestaltet.

Mit der Weichenschaltung wird dem Rechnung getragen, dass die reduzierte maximale Sendeleistung möglicherweise dazu führt, dass die maximal verfügbare Sendeleistung am Endgerät für manche Verbindungen nicht mehr ausreichend ist. Würde die Verbindung trotzdem hergestellt, wäre sie möglicherweise erheblich gestört. Um das zu vermeiden, wird die Anfrage anderweitig behandelt, ohne Herstellen der angefragten Verbindung, auf eine Weise, für welche die verfügbare maximale Sendeleistung ausreicht.

Bei der zuletzt angegebenen Variante werden Verbindungsanfragen, die bei eingestellter Öko-Schalterstellung eingehen, und die eine besonders hohe Sendeleistung benötigen, bedarfsweise alternativ behandelt.

Wahlweise wird die alternative Behandlung durch die Weichenschaltung im oben genannten Fall automatisch eingeleitet.

Wahlweise weist die Weichenschaltung weiter eine Nutzerschnittstelle auf, über die ein Nutzer aufforderbar ist, zu entscheiden, ob eine Verbindung hergestellt werden soll oder ob eine alternative Behandlung der Anfrage durchgeführt werden soll, und über die eine auf die Aufforderung ergehende Entscheidung des Nutzers entgegennehmbar und umsetzbar ist, so dass in Abhängigkeit von der Entscheidung die Verbindung hergestellt wird oder die Verbindung nicht hergestellt wird und eine alternative Behandlung der Anfrage durchgeführt wird.

Die Nutzerschnittstelle ermöglicht es einem Nutzer, eine Verbindungsanfrage, die eine für die Schalterstellung, z.B. Öko-Schalterstellung, zu hohe maximale Sendeleistung benötigt, wahlweise dennoch zu akzeptieren, oder alternativ an die alternative Behandlung weiterzuleiten. Falls die Verbindungsanfrage akzeptiert wird, wird bedarfsweise die Schalterstellung geändert, auf z.B. die Standard-Schalterstellung, wahlweise durch den Nutzer oder automatisch, sobald der der Nutzer die Verbindungsanfrage akzeptiert hat, und die Verbindung hergestellt.

Wahlweise umfasst die alternative Behandlung, dass die Anfrage an einen dem Endgerät zugeordneten Anrufbeantworter, z.B. eine Mailbox, weitergeleitet wird.

Wahlweise umfasst die alternative Behandlung ein Auswählen eines von mehreren für das Endgerät verfügbaren Mobilfunknetzes und bedarfsweise ein Wechseln eines bei Empfang der Anfrage gerade ausgewählten Mobilfunknetzes gegen ein anderes Mobilfunknetz. Beispielsweise wird ein Mobilfunknetz ausgewählt, das mit einer besonders geringen Sendeleistung auskommt, bzw. in ein Mobilfunknetz gewechselt, das mit einer geringeren Sendeleistung auskommt als das zuvor ausgewählte.

Wahlweise ist als Verbindung eine Sprachverbindung vorgesehen. Wahlweise ist als Verbindung eine Verbindung eines Nachrichtendienstes, z.B. SMS oder MMS oder dergleichen, oder eines Datendienstes, z.B. GPRS, HSDPA, HSUPA oder dergleichen, vorgesehen.

Im Folgenden wird die Erfindung an Hand von Ausführungsbeispielen und unter Bezugnahme auf die Zeichnung näher erläutert, in der zeigt:

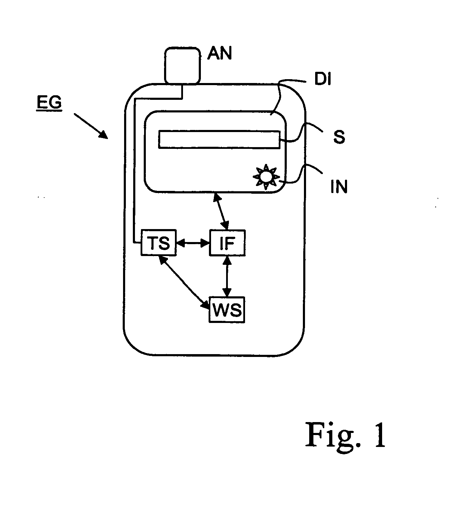

Fig. 1 ein mobiles Endgerät gemäß einer Ausführungsform der Erfindung.

Fig. 1 zeigt ein mobiles Endgerät EG gemäß einer Ausführungsform der Erfindung. Das Endgerät EG ist ein Mobiltelefon mit einer Tastatur (der Übersichtlichkeit halber nicht dargestellt), einem Display DI und einer Antenne AN. Mit der Antenne AN ist eine Transmitterschaltung TS verbunden, die zum Senden und Empfangen von elektromagnetischer Strahlung für Verbindungen im Mobilfunknetz eingerichtet ist. Auf dem Display DI ist ein Menü darstellbar, mit dem sich unter Verwendung von Tastatur oder/ und Display Funktionalitäten des Endgeräts durchführen lassen. Als ein Menüpunkt ist ein Schalter S im Menü softwaretechnisch implementiert, mit dem sich wahlweise eine Standard-Schalterstellung ST oder Öko-Schalterstellung ECO für die maximale mittels der Transmitterschaltung TS für das Endgerät EG herstellbare Sendeleistung einstellen lässt. Bei Standard-Schalterstellung ST ist die maximale Sendeleistung die vom Hersteller vorgesehene. Bei Öko-Schalterstellung ECO ist die maximale Sendeleistung reduziert. Ein visueller Sendeleistungs-Indikator IN im Display DI wird nur dann angezeigt, falls die Öko-Schalterstellung ECO eingestellt ist.

## Patentansprüche

1. Mobiles Endgerät (EG) zum Betreiben von Verbindungen in einem Mobilfunknetz, mit
einer Transmitterschaltung (TS), die ein Senden von elektromagnetischer Strahlung zum Betreiben der Verbindungen mit variabler Sendeleistung ermöglicht, und
einem durch einen Nutzer des Endgeräts (EG) betätigbaren Schalter (S) zum Einstellen der mit dem Endgerät (EG) maximal aussendbaren Sendeleistung in Abhängigkeit von einer Schalterstellung des Schalters (S), wobei mit dem Schalter (S) mindestens zwei Schalterstellungen einstellbar sind, die mindestens zwei Stufen von Sendeleistung entsprechen, und wobei bei einer Standard-Schalterstellung (ST) des Schalters (S) eine standardmäßig vorgesehene erste maximale Sendeleistung eingestellt ist und bei einer Öko-Schalterstellung (ECO) des Schalters (S) eine geringere zweite maximale Sendeleistung eingestellt ist
**gekennzeichnet durch**
eine Weichenschaltung (WS), mit der eine beim Endgerät (EG) eingehende Anfrage zum Herstellen einer Verbindung daraufhin überprüfbar ist, welche Sendeleistung zum Herstellen der Verbindung gemäß der Anfrage erforderlich ist, wobei die Weichenschaltung (WS) dazu eingerichtet ist, die Verbindung zumindest zunächst nicht herzustellen und eine alternative Behandlung der Anfrage durchzuführen, falls am Endgerät (EG) die Öko-Schalterstellung (ECO) eingestellt ist und zugleich, gemäß der Überprüfung, zum Herstellen der Verbindung gemäß der Anfrage eine Sendeleistung erforderlich ist, welche die der Öko-Schalterstellung (ECO) entsprechende geringere zweite maximale Sendeleistung, erreicht oder übersteigt.

2. Endgerät (EG) nach Anspruch 1, wobei der Schalter (S) als zumindest teilweise mechanischer Schaltknopf gestaltet ist.

3. Endgerät nach Anspruch 1, wobei der Schalter (S) als auswählbarer Menüpunkt in einem softwaretechnisch implementierten Menü des Endgeräts (EG) gestaltet ist.

4. Endgerät (EG) nach einem der Ansprüche 1 bis 3, das weiter aufweist: einen Sendeleistungs-Indikator (IN), mit dem die Schalterstellung oder die in Abhängigkeit von der Schalterstellung eingestellte Sendeleistung für den Nutzer wahrnehmbar anzeigbar ist.

5. Endgerät (EG) nach einem der Ansprüche 1 bis 4, wobei die Weichenschaltung (WS) weiter aufweist:
eine Nutzerschnittstelle (IF), über die ein Nutzer aufforderbar ist, zu entscheiden, ob eine Verbindung hergestellt werden soll oder ob eine alternative Behandlung der Anfrage durchgeführt werden soll, und über die eine auf die Aufforderung ergehende Entscheidung des Nutzers entgegennehmbar und umsetzbar ist, so dass in Abhängigkeit von der Entscheidung die Verbindung hergestellt wird oder die Verbindung nicht hergestellt wird und
eine alternative Behandlung der Anfrage durchgeführt wird.

6. Endgerät (EG) nach einem der Ansprüche 1 bis 5, wobei die alternative Behandlung umfasst, dass die Anfrage an einen dem Endgerät (EG) zugeordneten Anrufbeantworter (MB, Mailbox) weitergeleitet wird.

7. Endgerät (EG) nach einem der Ansprüche 1 bis 6, wobei die alternative Behandlung ein Auswählen eines von mehreren für das Endgerät (EG) verfügbaren Mobilfunknetzes und bedarfsweise ein Wechseln eines bei Empfang der Anfrage gerade ausgewählten Mobilfunknetzes gegen ein anderes Mobilfunknetz umfasst.

8. Endgerät (EG) nach einem der Ansprüche 1 bis 7, wobei als Verbindung eine Sprachverbindung vorgesehen ist.

9. Endgerät (EG) nach einem der Ansprüche 1 bis 8, wobei als Verbindung eine Verbindung eines Nachrichtendienstes oder Datendienstes (SMS, MMS, GPRS, HSDPA, HSUPA) vorgesehen ist.
